(19) Europäisches Patentamt
European Patent Office
Office européen des brevets

(11) Numéro de publication: **0 244 288 B1**

(12) **FASCICULE DE BREVET EUROPEEN**

(45) Date de publication du fascicule du brevet: **23.05.90**

(51) Int. Cl.⁵: **C08F 8/00**, C08G 77/38, G02F 1/37

(21) Numéro de dépôt: **87400816.2**

(22) Date de dépôt: **10.04.87**

(54) **Matériau polymérique mésomorphe utilisable en optique non linéaire.**

(30) Priorité: **15.04.86 FR 8605362**

(43) Date de publication de la demande: **04.11.87 Bulletin 87/45**

(45) Mention de la délivrance du brevet: **23.05.90 Bulletin 90/21**

(84) Etats contractants désignés: **DE GB IT NL**

(56) Documents cités:
**EP-A- 0 060 335**
**EP-A- 0 140 133**
**EP-A- 0 172 450**
**DE-A- 3 009 235**

(73) Titulaire: **THOMSON-CSF, 51, Esplanade du Général de Gaulle, F-92800 Puteaux(FR)**

(72) Inventeur: **Le Barny, Pierre, THOMSON-CSF SCPI 19, avenue de Messine, F-75008 Paris(FR)**
Inventeur: **Ravaux, Gilles, THOMSON-CSF SCPI 19, avenue de Messine, F-75008 Paris(FR)**
Inventeur: **Dubois, Jean-Claude, THOMSON-CSF SCPI 19, avenue de Messine, F-75008 Paris(FR)**

(74) Mandataire: **Lepercque, Jean et al, THOMSON-CSF SCPI, F-92045 PARIS LA DEFENSE CEDEX 67(FR)**

**EP 0 244 288 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des matériaux polymériques utilisables en optique non linéaire. Plus précisément, elle concerne un nouveau type de matériau qui, convenablement orienté, est capable de générer avec un rendement élevé la seconde harmonique d'une onde électromagnétique dont la longueur d'onde peut être comprise entre 300 nm et 2000 nm.

Actuellement, les matériaux les plus couramment utilisés pour obtenir le phénomène de génération de seconde harmonique, c'est-à-dire l'obtention d'une onde de pulsation 2 ω à partir d'une onde de pulsation ω, sont des monocristaux minéraux comme le niobiate de lithium ou le dihydrogénophosphate de lithium.

Il n'y a qu'une dizaine d'années qu'on s'est aperçu que les matériaux organiques pouvaient conduire à des phénomènes non linéaires très intenses, bien souvent plus importants que ceux obtenus avec les produits minéraux.

Les matériaux organiques actifs en génération de seconde harmonique ont la particularité de présenter à l'échelle moléculaire une très grande dissymétrie de densité électronique. C'est le cas par exemple du 4-N-diméthylamino-4'-nitrostilbène (DANS). Mais pour que le composé donne naissance au phénomène de génération de seconde harmonique, il faut en plus que l'arrangement moléculaire préserve à l'échelle macroscopique la dissymétrie de densité électronique qui existe à l'échelle moléculaire. Pour satisfaire cette condition, il est nécessaire d'obtenir des monocristaux non centrosymétriques. Cependant, le taux de réussite dans l'obtention de tels cristaux n'est que de 20 % avec les composés non chiraux. En effet, les molécules comme le DANS présentent un fort moment dipolaire permanent et s'apparient tête-bêche, ce qui conduit à un système centrosymétrique.

On peut éliminer le centre de symétrie d'un monocristal formé à partir de molécules ayant une forte hyperpolarisabilité mais s'appariant tête-bêche en le dissolvant dans une matrice de polymère nématique à chaînes latérales. Ceci a été décrit par G.R. MEREDITH, J.G. VAN DUSEN et D.J. WILLIAMS dans la revue Macromolecules, 1982, tome 15, pp. 1385-1389. Le mélange ainsi réalisé est chauffé au-dessus de la température de transition vitreuse (Tg) du polymère. L'orientation non centrosymétrique est obtenue au moyen d'un champ électrique continu. Elle est ensuite "gelée" à l'état vitreux en refroidissant l'ensemble sous champ électrique. Dans un tel processus, les molécules actives en génération de seconde harmonique se placent parallèlement aux chaînes latérales du polymère, ces dernières s'orientant parallèlement au champ électrique.

Dans l'article cité, c'est un copolymère qui a été utilisé comme matrice orientante (ou "host" d'après la terminologie anglosaxonne), le DANS étant utilisé en tant que composé apte à génerer la seconde harmonique. Le matériau obtenu présente une susceptibilité du second ordre $\chi^{(2)}$ de $6.10^{-9}$ ues (unité électrostatique) en utilisant un champ électrique de 0,6 V/μm.

L'inconvénient majeur que présente ce matériau provient de son procédé de fabrication. La faible solubilité des molécules aptes à générer la seconde harmonique dans les polymères mésomorphes conduit à de faibles intensités de l'onde à la pulsation 2 ω.

Afin de pallier ces inconvénients, l'invention propose d'augmenter l'efficacité du matériau en fixant, au moyen d'une liaison covalente, l'entité génératrice de seconde harmonique et le groupe mésogène sur un même squelette polymérique. Ceci permet d'obtenir des matériaux à haute teneur en fonctions génératrices de seconde harmonique.

L'invention a donc pour objet un matériau polymérique mésomorphe dont la structure comporte un squelette sur lequel sont rattachées des chaînes latérales, le matériau résultant de l'association d'un premier et d'un second monomère, chacun des monomères possédant un élément dudit squelette et une chaîne latérale caractéristique de ce monomère, caractérisé en ce que :
- le squelette est un polyacrylate, un polyméthacrylate, un polychloroacrylate ou un polysiloxane,
- les chaînes latérales sont formées d'un élément spécifique aux monomères et d'un espaceur permettant son rattachement à l'élément de squelette,
- l'espaceur est du type $-(CH_2)_n$ avec $2 \leq n \leq 15$ ou $-(CH_2\text{-}CH_2\text{-}O)_n$ avec $1 \leq n \leq 5$,
- l'élément spécifique au premier monomère est un groupe mésomorphogène présentant une anisotropie diélectrique positive,
- l'élément spécifique au second monomère est un groupe possédant la structure suivante :
D - (système à électrons π délocalisés) - A où D est un groupement donneur d'électrons et A un groupement accepteur d'électrons, cet élément spécifique étant relié à l'espaceur au moyen du groupement D.

L'invention sera mieux comprise et d'autres avantages apparaîtront au moyen de la description qui va suivre et des dessins annexés parmi lesquels :

- la figure 1 représente la formule chimique d'un copolymère utilisé dans l'art connu pour servir de matrice à des molécules aptes à générer la seconde harmonique d'une onde électromagnétique,
- la figure 2 représente la formule chimique d'un composé selon l'art connu et possédant une forte hyperpolarisabilité moléculaire,
- la figure 3 représente la structure du matériau polymérique selon l'invention,
- la figure 4 représente la formule chimique d'un matériau selon l'invention,

- la figure 5 est un détail de la formule chimique de la figure 4,
- la figure 6 est un thermogramme du matériau selon l'invention dont la formule est représentée à la figure 4,
- la figure 7 représente une cellule utilisée pour obtenir un film orienté,
- la figure 8 représente une lame supportant des électrodes et faisant partie de la cellule de la figure 7.

Le copolymère nématique utilisé par Meredith, Van Dusen et Williams dans la revue citée plus haut est représenté à la figure 1. Le squelette de ce copolymère est du polyméthacrylate. Dans ce copolymère servant de matrice, on ne peut dissoudre que 2 % en poids de 4N diméthylamino 4' nitrostilbène (DANS) dont la formule chimique est représentée à la figure 2. Cette faible solubilité explique la faible intensité de l'onde à la pulsation 2 ω qui peut être générée.

Le matériau polymérique selon l'invention possède la structure représentée à la figure 3. Il est formé à partir de deux monomères 1 et 2 dont les fractions molaires sont respectivement 1-x et x. Le matériau polymérique est donc formé d'un squelette 3, chacun des monomères 1 et 2 possédant un élément constitutif de ce squelette, et de chaînes latérales. Le monomère 1 comporte un groupe mésomorphogène 4 relié au squelette 3 par un espaceur 5. Le monomère 2 comporte un groupe 6 possédant une forte hyperpolarisabilité et apte à générer la seconde harmonique d'une onde électromagnétique. Ce groupe 6 est relié au squelette 3 par un espaceur 7.

Le copolymère selon l'invention doit posséder les propriétés suivantes. Il doit être amorphe à la température ambiante et avoir une température de transition vitreuse supérieure à la température ambiante. Il doit présenter une mésophase unique, de préférence nématique puisque c'est celle qui s'oriente le plus facilement sous l'effet d'un champ électrique. Pour satisfaire à ces exigences, on choisira les éléments constitutifs du copolymère de la façon suivante. Le squelette 3 du copolymère pourra être un polyméthacrylate, un polyacrylate, un polychloroacrylate ou un polysiloxane. Les espaceurs 5 et 7 seront du type $-(CH_2)_n$ avec $2 \leq n \leq 15$ ou $-(CH_2-CH_2-O)_n$ avec $1 \leq n \leq 5$. Il faut noter que les espaceurs 5 et 7 ne sont pas nécessairement identiques pour un même copolymère. La structure du groupe mésomorphogène 4 sera telle que ce groupe présentera une anisotropie diélectrique positive afin de permettre l'orientation des chaînes latérales du polymère parallèlement au champ électrique. Pour ce faire, un ou plusieurs dipôles permanents seront introduits dans l'architecture du groupe mésomorphogène. Ils seront avantageusement choisis parmi les suivants : $-NO_2$, $-CN$, F, Cl, Br, $-CF_3$ ou alkoxy.

Le groupe 6 actif en génération de seconde harmonique aura la structure chimique suivante :

D - (Système à électrons π délocalisés) - A.

Dans ce groupe, D désigne un groupement donneur d'électrons et A un groupement accepteur d'électrons. D sera choisi de préférence parmi les fonctions chimiques suivantes : amines secondaires - NH - R (R désignant un alkyle), amines tertiaires $-NR_1R_2$ ($R_1$ et $R_2$ désignant des alkyles), un atome d'oxygène impliqué dans une liaison éther ou un atome de soufre impliqué dans une liaison thioéther. A pourra être choisi parmi les fonctions chimiques suivantes :

$$-NO_2,\ -NO,\ -CN,\ -C{\overset{\nearrow O}{\searrow}}\ \text{ou}\ R_3\overset{+}{N}-\ (R_3\ \text{étant un alkyle}).$$

Quant au système à électrons π délocalisés, il pourra appartenir à l'une des fonctions chimiques suivantes :

$-(CH_2)_n$ avec $1 \leq n \leq 5$

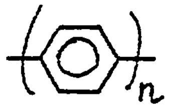 avec $1 \leqslant n \leqslant 3$

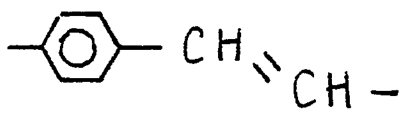

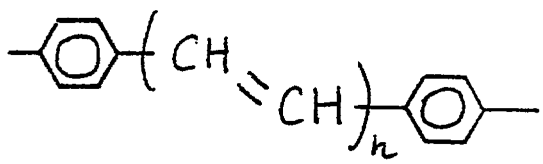 avec $1 \leqslant n \leqslant 3$

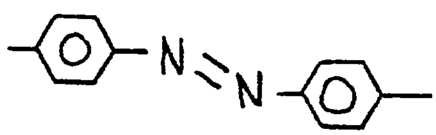

L'élaboration du matériau polymérique mésomorphe selon l'invention ne pose pas de problème particulier à l'homme de l'art. Selon les constituants du matériau, différentes solutions sont possibles pour sa synthèse. Dans certains cas, il est préférable de polymériser d'abord le squelette et d'y rattacher ensuite les chaînes latérales. Dans d'autres cas, il est avantageux de synthétiser d'abord les monomères 1 et 2 et d'effectuer ensuite la copolymérisation. De même, les autres constituants (groupe mésomorphogène 4, espaceur 5 et 7, groupe 6 apte à générer la seconde harmonique) peuvent être synthétisés ou rattachés en une ou plusieurs fois.

On peut mentionner, à titre non limitatif, quelques solutions. Par exemple, le groupe mésomorphogène choisi est le 4 hydroxy 4′ cyanobiphényle. Si le squelette est du polysiloxane, il sera polymérisé au préalable et l'espaceur comportera une double liaison en bout de chaîne permettant à la réaction d'hydrosilylation de se faire. Dans les autres cas de squelette où la copolymérisation des monomères se fait en dernier lieu, l'espaceur portera la fonction alcool en bout de chaîne, ce qui permet l'estérification ultérieure par le chlorure d'un acide acrylique α-substitué ou non. Un autre exemple est constitué par le groupe mésomorphogène suivant :

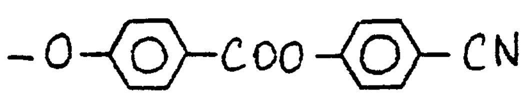 .

Ce groupe peut être introduit en deux fois. Une première partie du groupe mésomorphogène est greffée sur l'espaceur correspondant. Cet ensemble est alors rattaché au squelette déjà polymérisé (cas du polysiloxane) ou à un élément du squelette (dans les autres cas). La deuxième partie du groupe mésomorphogène est ensuite rattachée à sa première partie.

D'une manière générale, le groupe apte à générer la seconde harmonique est formé en une ou deux fois suivant les cas.

La figure 4 représente la structure chimique d'un matériau polymérique mésomorphe selon l'invention. Le paramètre 0,424 désigne le titre molaire en monomère azoïque actif en génération de seconde harmonique. Son squelette 3 est un polyacrylate. Les espaceurs 5 et 7 sont identiques et du type $(CH_2)_n$ avec n = 6. Le groupe 6 apte à générer la seconde harmonique est décrit plus en détail par la figure 5. Ce copolymère présente une seule mésophase entre la température de transition vitreuse Tg = 32,7°C et la température de clarification Tc = 127°C comme le montre le thermogramme de la figure 6. L'axe des ordonnées de ce diagramme est gradué en quantité de chaleur Q fournie par unité de temps (mcal/s)(1mcal/s = $10^{-3}$·4.184J/s). L'axe des abscisses porte la température T en degrés centigrades. Ce diagramme a été relevé pendant la montée en température d'un échantillon de masse 4,27 mg et pour une vitesse de chauffe de 10°C/min. La texture de ce copolymère, observée par microscopie optique ente analyseur et polariseur croisés, est caractéristique d'une mésophase nématique.

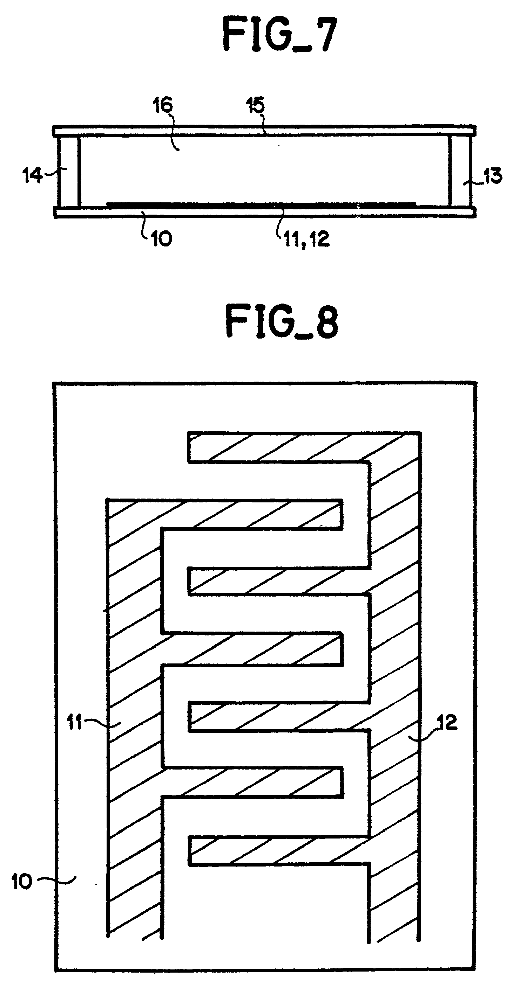

Afin d'obtenir un film orienté, ce copolymère a été fondu sur une lame de verre 10 recouverte d'un système d'électrodes interdigitées 11 et 12 du type représenté à la figure 8. Ces électrodes sont transparentes et par exemple réalisées en oxyde mixte d'étain et d'indium. L'espacement entre deux doigts consécutifs est de l'ordre de 80 μm. La lame de verre 10 recouverte du copolymère est laissée une dizaine de minutes à 150°C sur un banc du type Kofler afin de permettre le dégazage du polymère puis une seconde lame de verre 15 est déposée sur le polymère fondu. La figure 7 représente la cellule utilisée pour obtenir un film orienté. On y retrouve, mais vue de profil, la lame de verre 10 supportant les électrodes 11 et 12. Deux cales 13 et 14, par exemple en un matériau tel que le "Mylar®" maintiennent les lames 10 et 15 à un écartement de 130 μm. Le polymère 16 est donc confiné dans l'espace défini par les lames et les cales. La cellule est ensuite refroidie à température ambiante puis scellée avec une colle du type "araldite". L'orientation des chaînes latérales du polymère est obtenue en appliquant une tension continue de l'ordre de 160 V aux bornes des électrodes 11 et 12, la cellule étant portée à une température de l'ordre de 120°C puis refroidie jusqu'à la température ambiante tout en maintenant la tension aux bornes des électrodes.

Si le film orienté est irradié à l'état vitreux au moyen d'un rayon laser de longueur d'onde 1,06 μm, la cellule génère une onde électromagnétique de longueur 0,53 μm. Le coefficient de réponse non linéaire obtenu est de $0{,}12.10^{-6}$ ues, ce qui correspond à une efficacité en intensité environ 300 fois plus grande que celle du niobiate de lithium. Cet exemple démontre bien la supériorité du matériau selon l'invention par rapport au matériau polymérique mentionné plus haut et dont le coefficient de réponse non linéaire vaut $6.10^{-9}$ ues.

Les copolymères selon l'invention peuvent trouver des applications dans de nombreux domaines de l'optoélectronique comme les communications optiques et l'optique intégrée. Dans ce dernier domaine, les polymères présentent un intérêt spécifique puisqu'ils peuvent être déposés sur des substrats de natures donc d'indices de réfraction différents.

## Revendications

1. Matériau polymérique mésomorphe dont la structure comporte un squelette sur lequel sont rattachées des chaînes latérales, le matériau résultant de l'association d'un premier et d'un second monomère, chacun des monomères possédant un élément dudit squelette et une chaîne latérale caractéristique de ce monomère, caractérisé en ce que :

- le squelette (3) est un polyacrylate, un polyméthacrylate, un polychloroacrylate ou un polysiloxane,
- les chaînes latérales sont formées d'un élément spécifique aux monomères (1, 2) et d'un espaceur (5, 7) permettant son rattachement à l'élément de squelette,
- l'espaceur est du type $-(CH_2)_n$ avec $2 \leq n \leq 15$ ou $-(CH_2\text{-}CH_2\text{-}O)_n$ avec $1 \leq n \leq 5$,
- l'élément spécifique au premier monomère (1) est un groupe mésomorphogène (4) présentant une anisotropie diélectrique positive,
- l'élément spécifique au second monomère est un groupe (6) possédant la structure suivante :

D - (système à électrons π délocalisés) - A

où D est un groupement donneur d'électrons et A un groupement accepteur d'électrons, cet élément spécifique étant relié à l'espaceur du côté du groupement D.

2. Matériau polymérique selon la revendication 1, caractérisé en ce que le groupe mésomorphogène (4) comprend un ou plusieurs dipôles du type suivant : $-NO_2$, $-CN$, F, Cl, Br, $-CF_3$ ou alkoxy.

3. Matériau polymérique selon l'une des revendications 1 ou 2, caractérisé en ce que le groupement D est une des fonctions chimiques suivantes : amines secondaires -NH-R, amines tertiaires $-NR_1R_2$, un atome d'oxygène impliqué dans une liaison éther avec le système à électrons π délocalisés ou un atome de soufre impliqué dans une liaison thioéther avec le système à électrons π délocalisés, les radicaux R, $R_1$ et $R_2$ étant des alkyles.

4. Matériau polymérique selon l'une quelconque des revendications 1 à 3, caractérisé en ce que le groupement A est une des fonctions chimiques suivantes :

$-NO_2$, $-NO$, $-CN$, 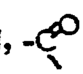 ou $R_3\overset{+}{N}-$,

le radical $R_3$ étant un alkyle.

5. Matériau polymérique selon l'une quelconque des revendications 1 à 4, caractérisé en ce que le système à électrons π délocalisés est l'un des systèmes suivants :

$-(CH_2)_n$ avec $1 \leq n \leq 5$

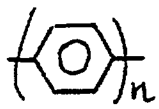 avec $1 \leqslant n \leqslant 3$

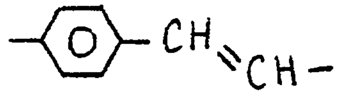

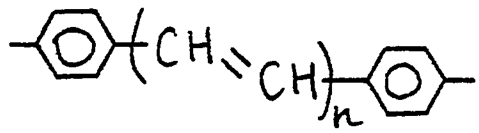 avec $1 \leqslant n \leqslant 3$

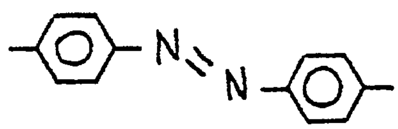

6. Matériau polymérique selon la revendication 5, caractérisé en ce que le squelette (3) est un polyacrylate, l'espaceur (5, 7) est $-(CH_2)_6$, le groupe mésomorphogène (4) est

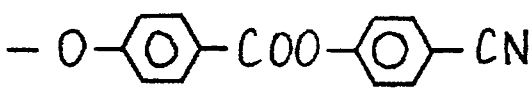

le groupement D est un atome d'oxygène, le groupement A est la fonction cyano et le système à électrons $\pi$ délocalisés est le système suivant :

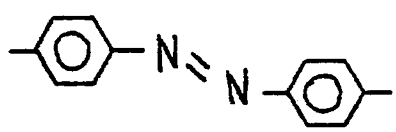

7. Matériau polymérique selon la revendication 6, caractérisé en ce que les fractions molaires du premier et du second monomère dans le copolymère sont respectivement 0,576 et 0,424.

## Claims

1. A mesomorphic polymer material, whose structure comprises a skeleton, to which sides chaines are attached, the material resulting from the association of two monomers, each of which includes a component of said skeleton and a side chain which is characteristic for said monomer, characterized in that:
– the skeleton (3) is a polyacrylate, a polymethacrylate, a polychloroacrylate for polysiloxane;
– the side chaines are formed from a component specific to the monomers (1, 2) and of a spacer (5, 7) allowing its attachment to the skeleton component;
– the spacer is of the type $-(CH_2)_n-$, with $2 \leq n \leq 15$, or else of the type $-(CH_2-CH_2-O)_n-$, with $1 \leq n \leq 5$;
– the component specific to the first monomer (1) is a mesomorphogenic group (4) having a positive dielectric antisotropy;.
– the component specific to the second monomer is a group (6) having the following structure:
D – (system of delocalized n-electrons) – A,
wherein D is an electron donator grouping and A is an electron acceptor grouping, said specific component being linked to the spacer at the side of the D-grouping.

2. A polymer material according to claim 1, characterized in that the mesomorphogenic group (4) comprises at least one dipole of the type: $-NO_2$, $-CN$, F, Cl, Br, $-CF_3$ or alkoxy.

3. A polymer material according to claim 1 or 2, characterized in that the D-grouping is one of the following chemical functions: secondary –NH–R-type amines, tertiary $-NR_1R_2-$ type amines, an oxygen atom applied in a liaison of ether with the system of delocalized n-electrons or a sulfur atom applied in a liaison of thioether with the system of delocalized n-electrons, the radicals R, $R_1$ and $R_2$ being alkyls.

4. A polymer material according to anyone of the claims 1 to 3, characterized in that the A-grouping is one of the following chemical functions:

$-NO_2$, $-NO$, $-CN$, 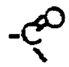 ou $R_3\overset{+}{N}-$,

the radical $R_3$ being an alkyl.

5. A polymer material according to anyone of the claims 1 to 4, characterized in that the system of delocalized n-electrons is one of the following systems:
$-(CH = CH)_n$, with $1 \leq n \leq 5$

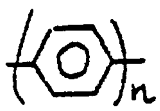 , with $1 \leq n \leq 3$

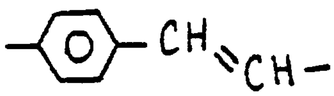

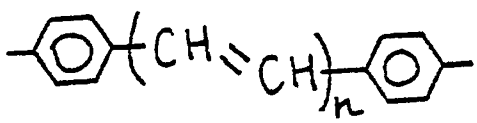 , with $1 \leq n \leq 3$

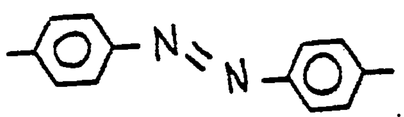

6. A polymer material according to claim 5, characterized in that the skeleton (3) is a polyacrylate, the spacer (5, 7) is $-(CH_2)_6-$, the mesomorphogenic group (4) is

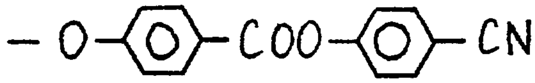

the D-grouping is an oxygen atom, the A-grouping is the cyanofunction and the system of delocalized n-electrons is the following system

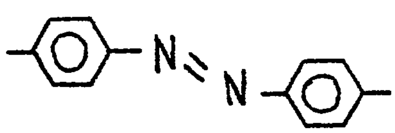

7. A polymer material according to claim 6, characterized in that the molar fractions of the first and second monomers in the copolymer are respectively 0,576 and 0,424.

**Patentansprüche**

1. Mesomorpher Polymerstoff, dessen Struktur ein Skelett aufweist, an das Seitenketten angebunden sind, wobei der Stoff aus der Vereinigung zweier Monomere hervorgeht, die je eine Komponente des Skeletts sowie eine für dieses Monomer charakteristische Seitenkette besitzen, dadurch gekennzeichnet, daß
– das Skelett (3) ein Polyacrylat, ein Polymethacrylat, ein Polychloracrylat oder ein Polysiloxan ist;
– die Seitenkette aus einem für die Monomere (1, 2) spezifischen Element und aus einer Abstandskomponente (5, 7) besteht, die deren Anbindung an das Skelettelement ermöglicht;

– die Abstandskomponente von Typ $-(CH_2)_n-$ mit $2 \leq n \leq 15$, oder $(CH_2-CH_2-O)_n-$ mit $1 \leq n \leq 5$ ist;
– das für das erste Monomer (1) spezifische Element eine mesomorphogene Gruppe (4) ist, welche eine positive dielektrische Anisotropie besitzt;
– das für das zweite Monomer spezifische Element eine Gruppe (6) mit folgender Struktur ist:
D – (System mit dilokalisierten Pi-Elektronen) – A,
wobei D eine Elektronendonatorgruppierung und A eine Elektronenakzeptorgruppierung ist und dieses spezifische Element mit dem Abstandshalter auf der Seite der D-Gruppierung verbunden ist.

2. Polymerstoff nach Anspruch 1, dadurch gekennzeichnet, daß die mesomorphogene Gruppe (4) mindestens einen Dipol vom Typ $-NO_2$, $-CN$, F, Cl, Br, $-CF_3$ oder einen Alkoxydipol aufweist.

3. Polymerstoff nach einem der Ansprüche 1 oder 2, dadurch gekennzeichnet, daß die D-Gruppierung eine der folgenden chemischen Funktionen ist: sekundäre Amine –NHR–, tertiäre Amine – $NR_1R_2$, ein in eine Ätherverbindung mit dem System delokalisierter Pi-Elektronen einbezogenes Sauerstoffatom oder ein in eine Thioätherverbindung mit dem System delokalisierter Elektronen einbezogenes Schwefelatom, wobei die Radikale R, $R_1$ und $R_2$ Alkyle sind.

4. Polymerstoff nach einem der Ansprüche 1 bis 3, dadurch gekennzeichnet, daß die A-Gruppierung eine der folgenden chemischen Funktionen ist: $-NO_2$, –NO, –CN,

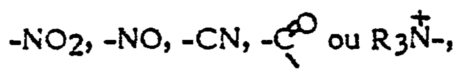

wobei das Radikal $R_3$ ein Alkyl ist.

5. Polymerstoff nach einem beliebigen der Ansprüche 1 bis 4, dadurch gekennzeichnet, daß das System delokalisierter Pi-Elektronen eines der folgenden Systeme ist:
$-(CH = CH)_n-$, mit $1 \leq n \leq 5$

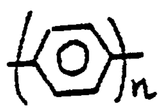 , mit $1 \leq n \leq 3$

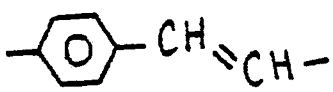

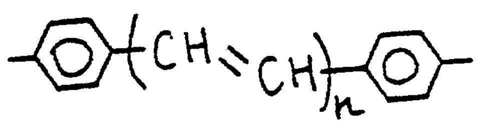 , mit $1 \leq n \leq 3$

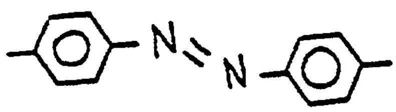

6. Polymerstoff nach Anspruch 5, dadurch gekennzeichnet, daß das Skelett (3) eine Polyacrylat, die Abstandskomponente (5, 7) die Gruppe – $(CH_2)_6$ – und die mesomorphogene Gruppe (4) die Gruppe

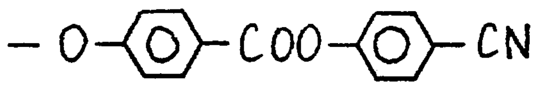

ist, wobei die D-Gruppierung ein Sauerstoffatom, die A-Gruppierung eine Cyanofunktion und das System delokalisierter Pi-Elektronen das folgende System ist:

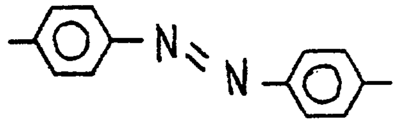

7. Polymerstoff nach Anspruch 6, dadurch gekennzeichnet, daß die molaren Anteile des ersten und des zweiten Monomers im Kopolymer 0,576 bzw. 0,424 betragen.

FIG_1

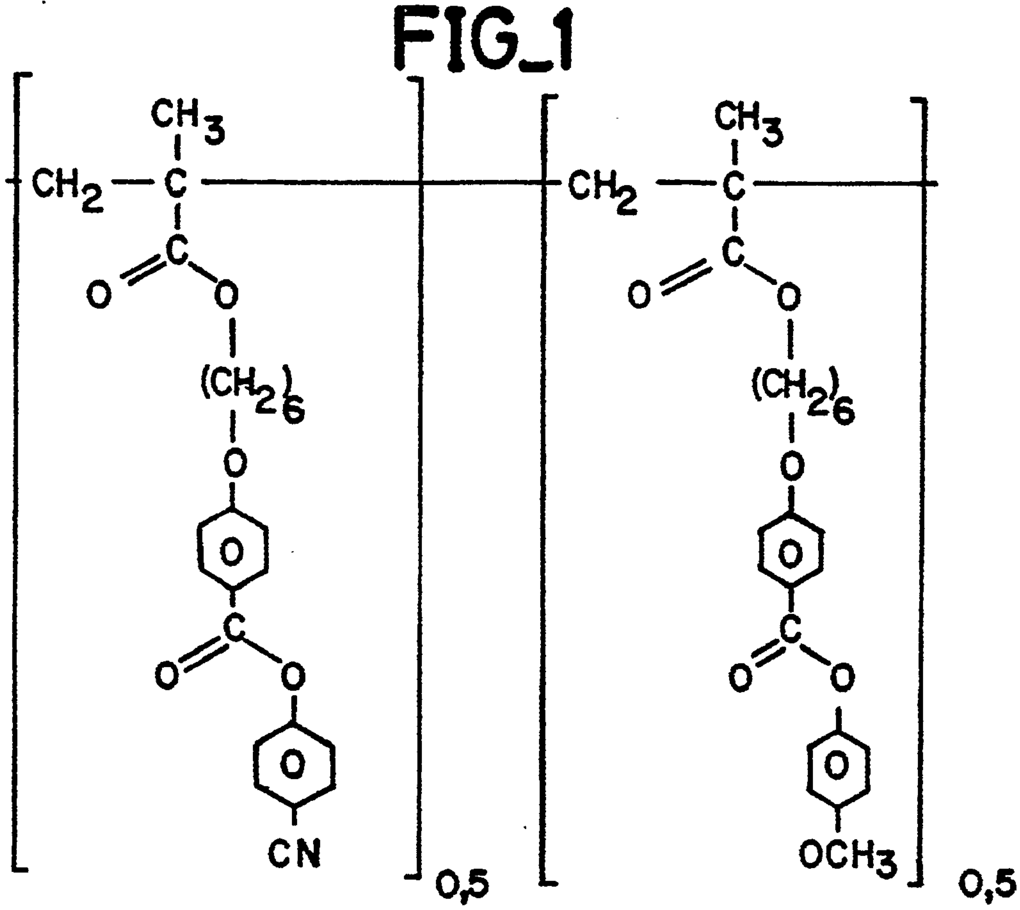

FIG_2

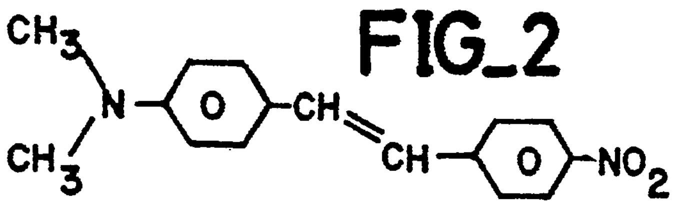

FIG_3

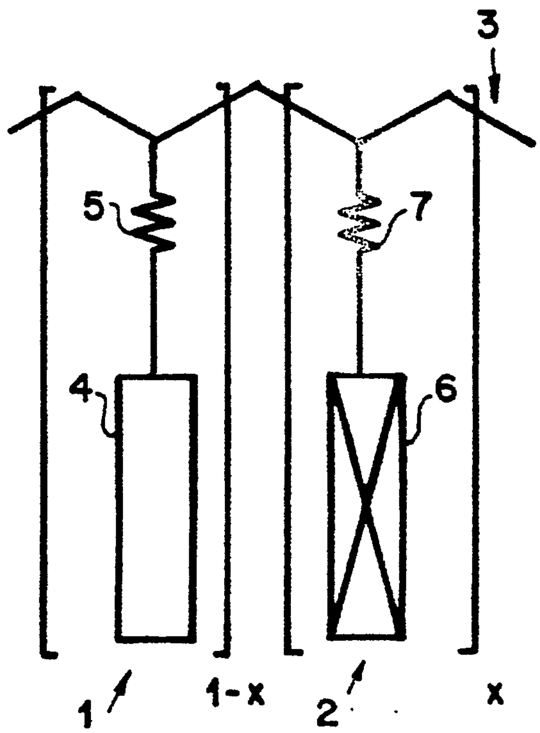

FIG_4

3 5 4

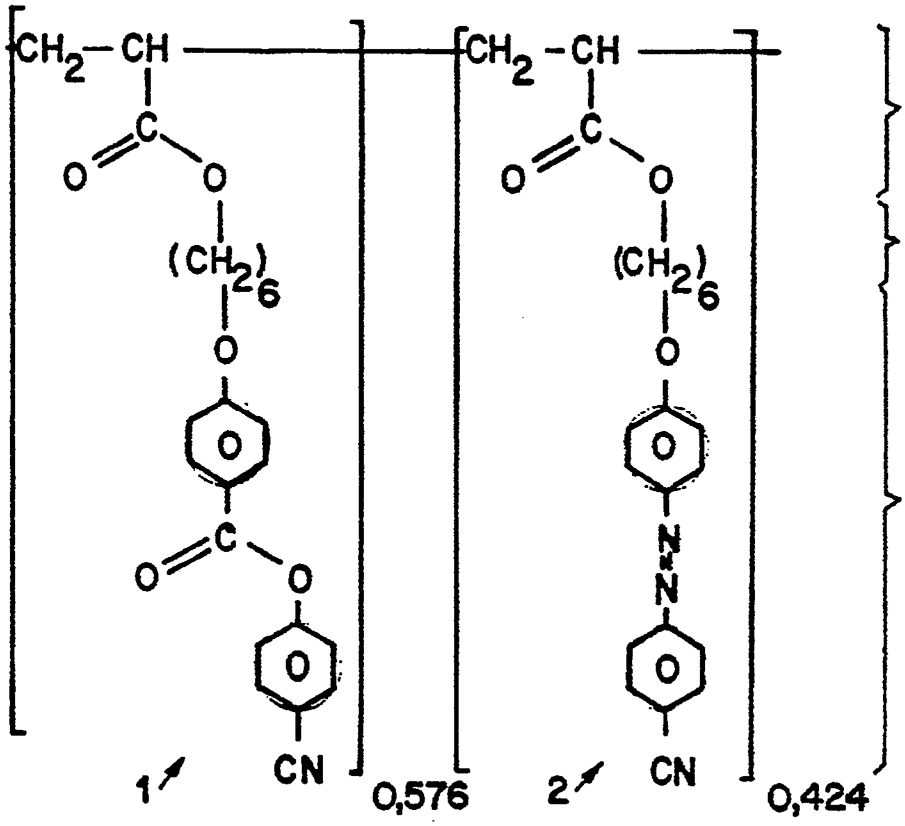

3 7 6

1 2

FIG_5

D

SYSTÈME À
ÉLECTRONS
π DÉLOCALISÉS

A

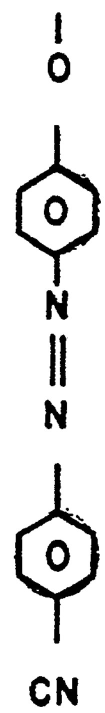

6

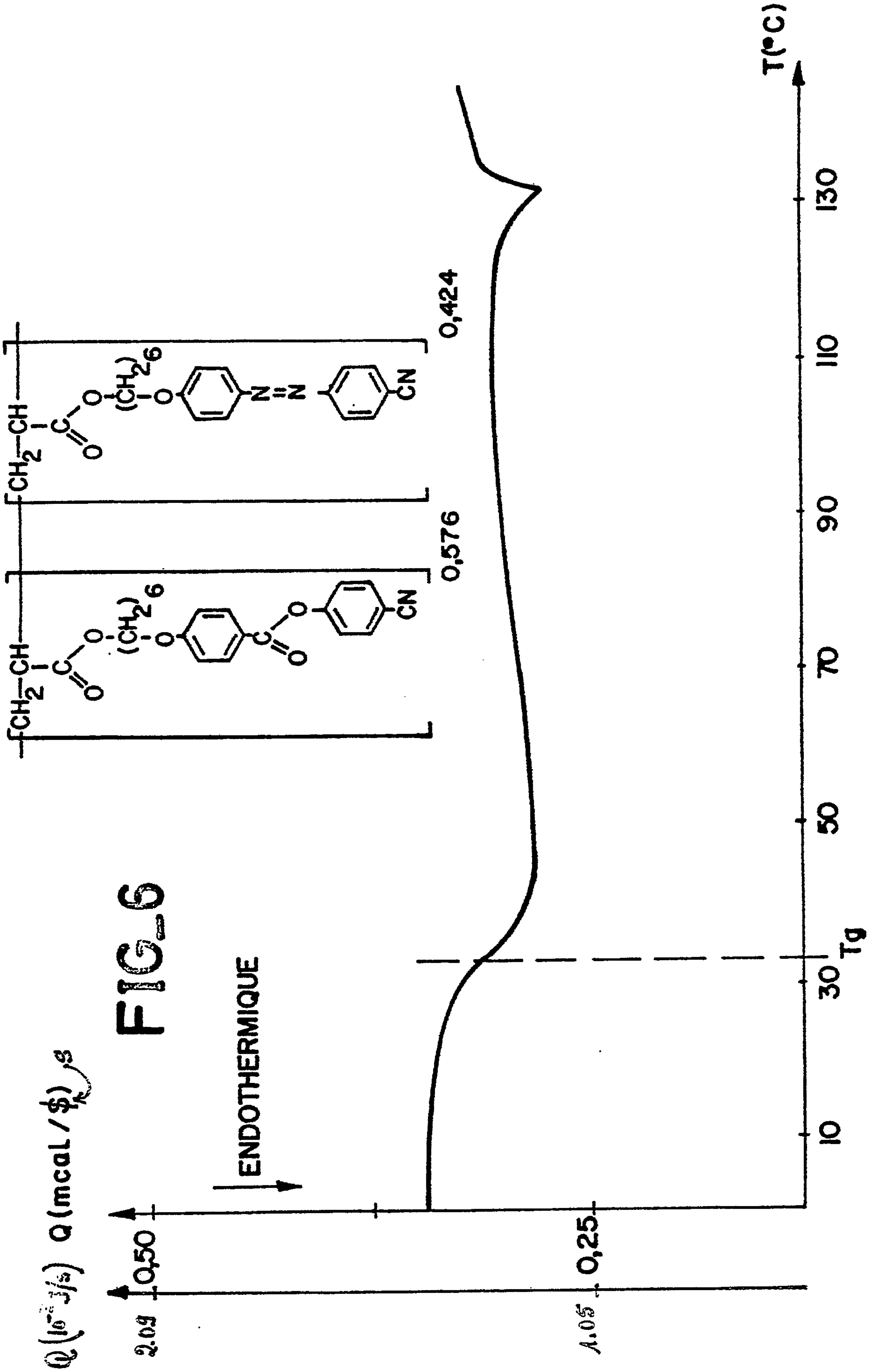
T(°C)
130
110
90
70
50
30
10
Tg
0,424
0,576
ENDOTHERMIQUE
Q (mcaL/s)
0,50
0,25

FIG_6

FIG_7

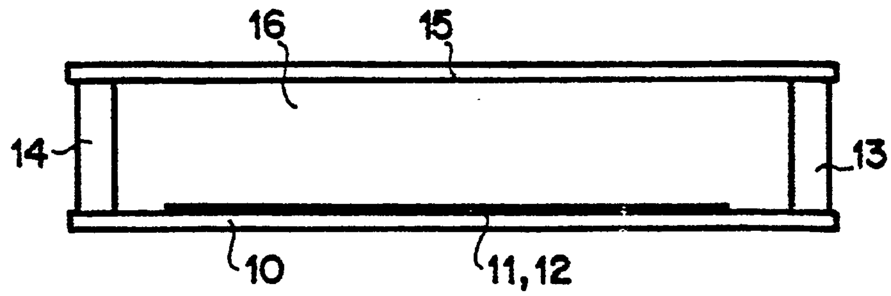


FIG_8